# EUROPÄISCHE PATENTANMELDUNG

(11) **EP 1 039 163 A2**
(43) Veröffentlichungstag der Anmeldung: **27.09.2000**
(21) Anmeldenummer: 99202819.1
(22) Anmeldetag: 30.08.1999
(51) Int. Cl.: F16D 41/24, B62K 5/00, B62M 9/02

(54) **Tretauto mit Freilaufkupplung**

(30) Priorität: 04.11.1998 NL 1010470
(71) Anmelder: Van Ee, Teunis Karel, 3771 MB Barneveld (NL)
(72) Erfinder: van Ee, Teunis Karel, 3771 MB Barneveld (NL); van Ee, Hendrik, 3886 MA Garderen (NL)
(74) Vertreter: Ferguson, Alexander

(57) **Zusammenfassung**

Tretauto (1) mit einer Freilaufkupplung (100) zwischen einem anzutreibenden Unterteil, wie einem Kettenrad (9) oder Rad, und einem treibenden Unterteil, wie einem Tretantrieb oder einer Achse, beziehungsweise, mit Kuppelmitteln umfassend zumindest eine erste, mit treibendem Unterteil in mitrotierenden Zustand bringbare Nocke (17) und zumindest eine zweite, mit dem zu treibenden Unterteil feste Nocke (18), wobei die erste Nocke (17) exzentrisch um die Rotationsachse des treibenden Unterteils zwischen einem relativ radial außengelegenen, in der Bahn der zweiten Nocke (18) greifenden ersten Antriebsstand und einem relativ radial innengelegenen, außer der Bahn der zweiten Nocke (18) fallenden Freilaufstand drehbar ist, wobei das treibende Unterteil mit darauf befestigten Mitnehmermitteln versehen ist, für das bei Rotation Versetzen der ersten Nocke (17) zu treibendem Angriff mit der zweiten Nocke (18), wobei zumindest ein der Kuppelmittel auf einem Unterteil, das auch zu den Mitteln für das hinsichtlich der betreffenden Rotationsachse Zentrieren des anzutreibenden Unterteils gehört, befestigt ist.

## Beschreibung

Die Erfindung bezieht sich auf ein Tretauto mit einer Freilaufkupplung.

Tretautos mit einer Freilaufkupplung sind bekannt. In dem niederländischen Patent 1005378 auf Namen von Anmelderin wird ein derartiges Tretauto gezeigt, wobei die Freilaufkupplung an der Hinterachse befestigt ist. Die Hinterachse wird hierbei mit Hilfe von auf der Hinterachse gesetztem Kettenrad angetrieben, das jedoch nicht drehfest auf der Achse befestigt ist. Neben dem Kettenrad befindet sich eine auf der Achse fest befestigte schüsselförmige Schale, die am Innenumfang mit einer Anzahl Nocken versehen ist. Auf dem Kettenrad ist hinsichtlich der Achse auf exzentrische Weise eine Buchse befestigt, worauf eine zweite Buchse rotieren kann. Die zweite Buchse ist an der Außenseite mit einer Nocke versehen. Auf dem Kettenrad ist weiter ein Mitnehmer vorgesehen, der mit dem Kettenrad mit rotiert, in der Bahn der Nocke auf der zweiten Buchse, und nach Anstoßen die Nocke in Drehung mitnimmt. Durch die exzentrische Aufstellung kommt die mitgeführte Nocke in der Bahn der Nocken auf die Schale, und wird nach Anstoßen gegen eine dieser Nocken diese mitzwingen in Drehung, wodurch die Schale mit dem Kettenrad mitrotiert und folglich die Achse angetrieben wird. Wenn der Benutzer die Pedale hält, dann hört das Kettenrad auf zu drehen und wird die angegriffene Nocke auf der Schale von der Nocke auf der zweiten Buchse wegdrehen können, wodurch es die Rede ist von einer Freilauflage.

Die bekannte Freilaufkupplung hat in der Praxis erwiesen gut zu wirken. Es besteht jedoch Bedarf an eine weitere Verbesserung einer Freilaufkupplung für Tretautos. Hierbei wird nach einfachem Aufbau und einfacher Montage gestrebt.

Aus einem ersten Aspect verschafft die Erfindung hierzu ein Tretauto oder Kinder Go-Kart mit einer Freilaufkupplung zwischen einem anzutreibenden Unterteil, wie einem Kettenrad oder Rad, und einem treibenden Unterteil, wie einem Tretantrieb oder einer -Achse, beziehungsweise, mit Koppelmitteln umfassend zumindest eine erste, mit treibendem Unterteil in mitrotierenden Zustand bringbare Nocke und zumindest eine zweite, mit dem zu treibenden Unterteil feste Nocke, wobei die erste Nocke exzentrisch um die Rotationsachse des treibenden Unterteils zwischen einem relativ radial außengelegenen, in der Bahn der zweiten Nocke greifenden ersten Antriebsstand und einem relativ radial innengelegenen, außer der Bahn der zweiten Nocke fallenden Freilaufstand drehbar ist, wobei das treibende Unterteil mit darauf befestigten Mitnehmermitteln versehen ist, für das bei Rotation Versetzen der ersten Nocke zu treibendem Angriff mit der zweiten Nocke, wobei zumindest ein der Kuppelmittel auf einem Unterteil, das auch zu den Mitteln für das hinsichtlich der betreffenden Rotationsachse Zentrieren des anzutreibenden Unterteils gehört, befestigt ist.

Hiermit wird auf Unterteile erspart, dadurch daß das Unterteil der Freilaufkupplung das das betreffende Koppelmittel hält eine extra (Halt)Funktion ausübt. Der benötigte Raum in Achserichtung kann hiermit beschränkt gehalten werden. Weiter wird Montageleichtigheit erzielt.

In einer ersten weiteren Entwicklung ist das genannte, betreffende Kuppelmittel eine zweite Nocke. Diese zweite Nocke kann hierbei in einer ersten weiteren Ausführung zu einem anzutreibenden Rad worauf ein Reifen montiert ist, gehören, womit das Rad eine doppelte Funktion erlangt.

Auf einfache Weise kann die zweite Nocke mit dem Rad in einer Vertiefung darin, vorzugsweise an Ort und Stelle des Nabengebietes, mitgeformt sein. Die Freilaufkupplung ist dann sozusagen versenkt im Rad aufgenommen, wobei die übrigen Unterteile einfach auf das Achsenende montiert sein können.

Vorzugsweise ist dabei eine Querplatte auf der Hinterachse befestigt, um die Vertiefung abzudecken, wobei die Querplatte mit den Mitnehmermitteln versehen ist.

Auf vorteilhafte Weise ist ein mit der ersten Nocke versehener Ring exzentrisch auf der Querplatte gelagert, vorzugsweise auf einem auf der Querplatte befestigten, exzentrischen Ring.

Vorzugsweise, insbesondere wenn die Feige aus Kunststoff hergestellt ist, hat die zweite Nocke über ein Teil des Bogens eine konstante radiale Dicke. Hierdurch wird eine zuverlässige Wirkung der Kupplung über lange Zeit erlangt, dadurch daß Verschleiß über einen langen (Umfangs)weg stattfinden kann, bevor die zweite Nocke zu weit verschleißt ist und das Rad ersetzt werden muß.

Anders gesagt, vorzugsweise hat die zweite Nocke eine Bogenlänge in der Größenordnung von mindestens einem Zentimeter.

Aus einem hiermit zusammenhängenden Aspekt verschafft die Erfindung ein Rad für ein Tretauto, mit einer Vertiefung wie obenerwähnt, versehen.

In einer zweiten weiteren Ausführung ist die zweite Nocke auf einem Ring, der das vorderste oder erste Kettenrad auf die Tretachse zentriert, gebildet. Hierbei wird also bei dem Halten des ersten Kettenrads eine Doppelfunktion erfüllt. Vorzugsweise ist der genannte Ring fest am Kettenrad befestigt, und kann zum Beispiel eine Art Kappe, wie vom obenerwähnten Tretauto bekannt, auf dem Kettenrad befestigt sein.

In einer zweiten weiteren Entwicklung ist das betreffende Kuppelmittel ein Mitnehmermittel für die erste Nocke. Das Mitnehmermittel ist hierbei vorzugsweise auf einer Querplatte befestigt, die das vorderste oder erste Kettenrad auf die Tretachse zentriert. Diese Querplatte bildet dabei zugleich eine Abschirmung.

Ein Nachteil des bekannten Tretautos ist, daß die von einer Freilaufkupplung versehenen Tretautos auf Lager gemacht werden müssen und nicht direkt auf Nachfrage produziert werden können, weil die Freilaufkupplung in der Hinterachse aufgenommen ist und also zu einem umfangreichen Teil des Tretautos gehört und schwierig erreichbar ist. Wenn es nötig sein dürfte, ist Ersetzung von (Unterteilen) der Freilaufkupplung eine zeitraubende Angelegenheit.

Eine weitere Aufgabe der Erfindung ist um hierin Verbesserung anzubringen. Hierzu verschafft die Anmeldung aus einem weiteren Aspekt ein Tretauto oder Kinder Go-Kart mit Tretachse mit damit verbundenen Pedalen, ein auf der Tretachse angeordnetes, eine Antriebskette angreifendes erstes Kettenrad und ein auf der Radachse angeordnetes zweites Kettenrad, wie auch eine um die beiden Kettenräder laufende Übertragungskette, wobei zwischen dem ersten Kettenrad und der Tretachse eine Freilaufkupplung angeordnet ist.

Der Tretantrieb ist ein Unterteil das leicht erreichbar ist und ohne daß viele andere Unterteile entfernt werden müssen, montiert oder demontiert werden kann. Dasselbe gilt dann auch für die auf der Tretachse gesetzte Freilaufkupplung. Die übrigen Antriebsunterteile, die Kette und die dahinten gelegenen Unterteile können auf dem Tretauto bleiben und regulär sein. Weiter ist der bei dem Kettenrad verfügbare radiale Raum ziemlich groß, so daß eine günstige Kraftübertragung stattfinden kann, ohne daß extra Raum eingenommen wird.

Die Freilaufkupplung gemäß der Erfindung funktioniert auf zuverlässige positive Weise in einer Radialfläche hinsichtlich der Antriebsachse mit einfachen Nocken die durch die doch schon vorhandene Drehbewegung aus Ineinandergreifung mit einander gebracht werden. Hierdurch ist die Kupplung einfach und kompakt.

Vorzugsweise umfaßt die Freilaufkupplung weiter mit der Tretachse drehfeste Mittel für das bei Verdrehung der Tretachse Mitnehmen von der ersten Nocke zu der zweiten Nocke bis in den ersten Antriebsstand, womit auf einfache, sichere und schnelle Weise die Kupplung zustande gebracht werden kann.

Die Kupplung gemäß der Erfindung kann auf einfache Weise für Wirkung in entgegengesetzter Richtung, rückwärts, einem zweiten Antriebsstand, eingerichtet werden.

Vorzugsweise umfaßt das Tretauto weiter einen ersten, drehfest mit der Tretachse verbundenen, kreisförmigen mit der Tretachse exzentrischen Ring, wobei die erste Nocke auf einem zweiten, kreisförmigen, mit der Tretachse exzentrischen Ring, der auf dem ersten Ring drehbar gelagert ist, befestigt ist.

Vorzugsweise bilden die Mitnehmermittel ein festes Ganzes mit dem ersten Ring und sind sie vorzugsweise mit in zwei entgegengesetzten Umfangsrichtungen gekehrten Mitnehmeroberflächen versehen, die hinsichtlich der Linie durch die Mine der Tretachse und des Exzenterpunktes symmetrisch gelegen sind.

Vorzugsweise ist die zweite Nocke radial betrachtet innerhalb des ersten Kettenrads gelegen. Es wird denn auch bevorzugt, daß die zweite Nocke auf einem mit der Tretachse konzentrischen Ring angeordnet ist.

Die Zeit die für das Kuppeln oder Entkuppeln benötigt ist, wird minimalisiert wenn gemäß einer weiteren Entwicklung gemäß der Erfindung eine Anzahl in Rotationsrichtung auf Abstand von einander gelegene zweite Nocken vorgesehen sind.

Eine einfache und starke Ausführung is die, worin die Mitnehmermittel auf einer quer auf der Tretachse stehenden Plane befestigt sind, die drehfest mit der Tretachse sind. Die Plane kann eventuell zu einer Kappe gehören, siehe hiernach.

Gemäß einer ersten weiteren Entwicklung des Tretautos gemäß der Erfindung bilden die genannten Mitnehmermittel ein festes Ganzes mit einer Tretkurbel. Die Kupplung befindet sich hier also zwischen einem Pedal mit Fußhebel und dem Kettenrad. Die Tretkurbel ist während Gebrauch für Drehung mit der Tretachse verbunden, aber kann - wenn nötig - von der Tretachse entfernt werden.

Vorzugsweise bildet der erste Ring hierbei ein festes Ganzes mit der Tretkurbel.

Eine einfache Ausführung ist die, wobei eine erste Querplatte ein festes Ganzes mit dem ersten Ring bildet und an der zur Tretkurbel gekehrten Seite mit den Mitnehmermitteln versehen ist, die vorzugsweise axial davon aufrecht sind. Die Querplatte formt hierbei nicht nur ein Mittel für Unterstützung der Mitnehmermittel aber auch eine Abschirmung.

Raumeinsparung und Einsparung auf die Anzahl Unterteile wird erreicht, wenn das erste Kettenrad zu einem Lager für die erste Querplatte gehört.

Der Raum in axialer Richtung wird beschränkt gehalten wenn die erste Querplatte radial und axial innerhalb des ersten Kettenrads liegt.

Die Sicherheit wird weiter vergrößert wenn eine zweite Querplatte vorgesehen ist, die ein festes Ganzes mit der Tretkurbel bildet, wobei der erste Ring die Verbindung zwischen den beiden Querplatten bildet. Die beiden Querplatten bilden dann sozusagen eine Sandwichkonstruktion, die die Freilaufkupplung nach zwei entgegengesetzten axialen Seiten abschirmt.

Vorzugsweise ist dabei ein Ziehspalt zwischen der zweiten Querplatte und den Mitnehmermitteln für ein sich ab dem Chassis erstreckendes Bremsmittel für den zweiten Ring übriggelassen.

Auf vorteilhafte Weise bilden die Tretkurbel mit dem ersten Kettenrad und der dazwischen gelegenen Freilaufkupplung eine als ein Ganzes montierbare Einheit. Dies hat als besonderes Vorteil, daß die Freilaufkupplung mit wenig Unterteilen ganz einfach ersetzt werden kann, aber auch statt eines konventionellen Kettenrads/Tretkurbelgestells montiert werden kann. Also kann mit einem kleinen Eingriff ein Standard Tretauto mit einer Freilaufkupplung versehen werden, neu, oder nach einiger Nutzungsdauer des Tretautos.

Gemäß einer zweiten weiteren Entwicklung des Tretautos gemäß der Erfindung, bildet der erste Ring ein festes Ganzes mit der eigentlichen Achse des Tretantriebs.

Es wird dabei bevorzugt wenn die zweite Nocke auf einer über die Kupplung reichenden Kappe angeordnet ist, vorzugsweise in oder auf der radial einwärts gekehrten Umfangsoberfläche davon, wodurch die Kupplung mit einem schon vorhandenen Unterteil abgeschirmt wird und also die Kompaktheit weiter vergrößert ist.

Anders umschrieben ist/sind in einer Vorzugsausführung die zweite(n) Nocke(n) auf einer Schale gelegen, die mit dem Boden die seitwärtse, axiale Begrenzung für einen Kupplungsraum der Freilaufkupplung bildet, welcher Raum zu der entgegengesetzten Seite durch einen Kettenschutz abgeschirmt ist. Vorzugsweise ist die Freilaufkupplung in einem Kettenschutz aufgenommen.

Vorzugsweise ist die Kappe mit einer ersten Buchse die um die Tretachse greift, versehen, wobei auf der Tretachse eine damit drehfeste zweite Buchse vorgesehen ist, die auf der ersten Buchse gelagert ist. Also wird eine gegenseitige Ausrichtung der Kappe, des Kettenrads und der Tretachse gefördert.

Auch in dieser Ausführung wird ein logistisches Vorteil erlangt. Hierzu kann die Tretachse in einem Tretachselager gelagert sein, das auf abnimmbare Weise an einem Chassisbalken des Tretautos befestigt ist.

Vorzugsweise sind weiter Bremsmittel vorgesehen für das gegen durch die Mitnehmermittel bei Drehung verursachten Reibungskräfte an ihrer Stelle Halten der ersten Nocke in dem Freilaufstand.

Die Erfindung bezieht sich weiter auf eine Freilaufkupplung offensichtlich geeignet und bestimmt für ein Tretauto wie oben umschrieben.

Aus einem anderen Aspekt verschafft die Erfindung eine Freilaufkupplung für ein Tretauto, für das Kuppeln eines Tretantriebs des Tretautos mit einem Zahnrad, umfassend einerseits einen mit der Tretachse konzentrisch und drehfest mit dem Zahnrad verbundenen Körper, wie zum Beispiel eine Kappe, mit zumindest einer radial einwärts reichenden Nocke, die auf einer mit der Tretachse konzentrischen Kreisbahn liegt und anderseits eine innerhalb des Körpers drehbare, hinsichtlich der Tretachse exzentrische Nocke, die zwischen einem relativ radial innengelegenen, außerhalb der Kreisbahn der Nocke an den Körper fallenden Freilaufstand und einem relativ außengelegenen, in der Kreisbahn dieser Nocke greifenden Antriebs- oder Kuppelstand, versetzbar ist.

Vorzugsweise ist der Tretantrieb mit einem damit drehfesten Mitnehmer versehen für das in Rotationsrichtung Mitführen der exzentrischen Nocke zu dem Antriebsstand und diese darin angedrückt zu halten.

Vorzugsweise ist die Nocke direkt oder indirekt auf der Tretachse gelagert.

Weitere vorteilhafte Ausführungen des Tretautos oder aber der Freilaufkupplung gemäß der Erfindung sind in beigefügten Ansprüchen umschrieben.

Die Erfindung wird an Hand einer Anzahl Ausführungsbeispiele, mit Bezug auf die zugefügten Zeichnungen, erläutert werden.
Figur 1 zeigt ein Tretauto worin eine mögliche Stelle einer Freilaufkupplung gemäß der Erfindung angegeben wird.
Figur 2 zeigt in Durchschnitt eine erste Ausführung der Freilaufkupplung gemäß der Erfindung, an einem Rad montiert.
Figur 3 zeigt eine Ansicht auf die Freilaufkupplung von Figur 2, gemäß III, hinter der Querplatte.
Figur 4 zeigt ein Durchschnitt durch eine zweite Beispielsausführung der Freilaufkupplung gemäß der Anmeldung, auf der Tretachse des Tretautos von Figur 1 montiert, in der Position für Antrieb rückwärts.
Figur 5 zeigt die Freilaufkupplung von Figur 4, in der Freilaufsposition.
Figur 6 zeigt die Freilaufkupplung von Figuren 4 und 5, jetzt jedoch in dem Stand für Antrieb vorwärts.
Figur 7 zeigt eine schematische perspektivische Ansicht auf die Freilaufkupplung von den Figuren 4-6, in montiertem Zustand.
Figur 8 zeigt einen Durchschnit durch eine dritte Beispielsausführung der Freilaufkupplung gemäß der Erfindung, bei der Tretachse aufgenomen.
Figuren 9-11 zeigen die Freilaufkupplung von Figur 8, in Situationen übereinstimmend met den gemäß Figuren 4-6.

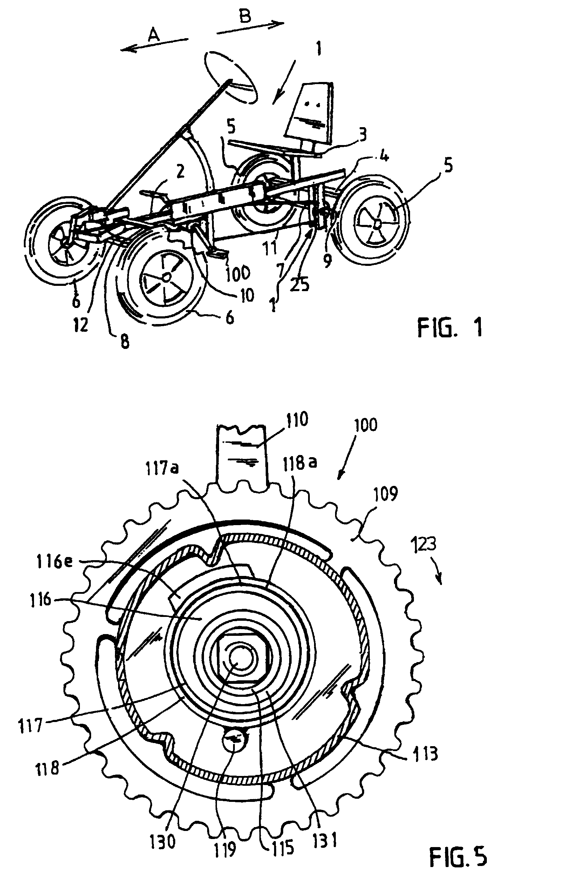

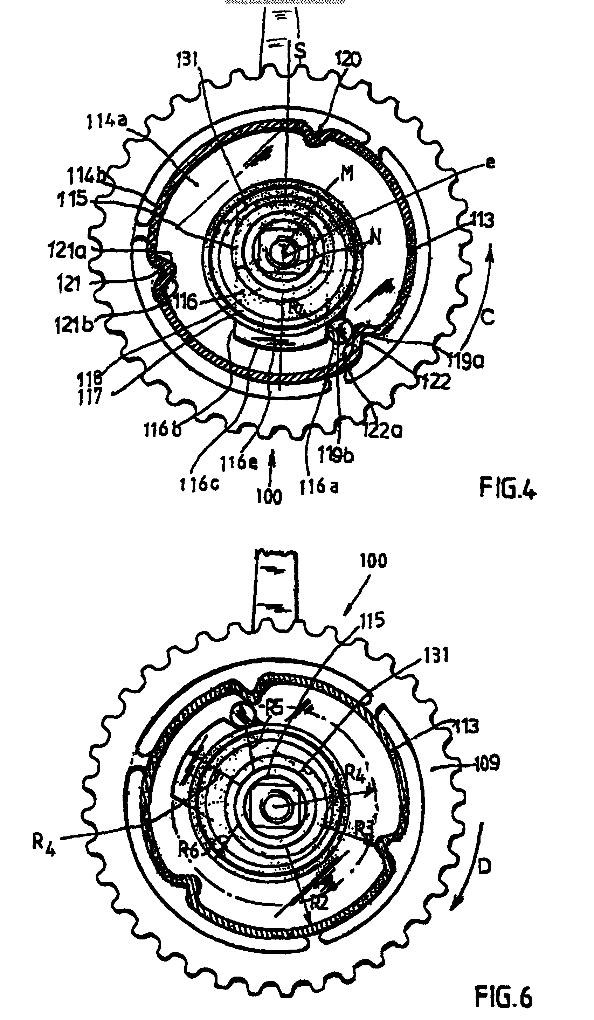

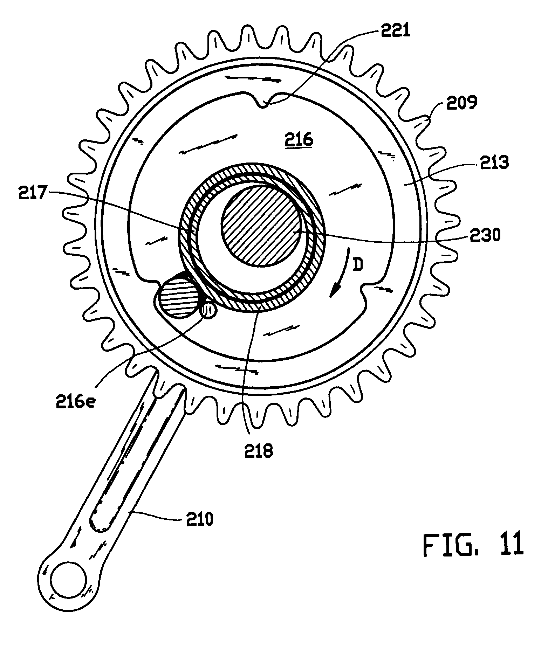

In Figur 1 ist das Tretauto oder Kinder Go-Kart 1 - ohne Motor - gemäß der Erfindung, angegeben, das ein Chassis mit Hauptbalken 2 umfaßt, mit darauf befestigtem Sitz 3, mit einem Hinterbalken 4 und Hinterrädern 5, die auf den Enden von Hinter- oder Antriebsachsen 7 befestigt sind, um dadurch angetrieben zu werden. Die Antriebsachsen 7 selbst werden mit Hilfe eines Zahnrads 25 angetrieben, das durch eine Kette 11 angegriffen wird, die via zahnradförmiges Vorblatt oder vorderstes Kettenrad 9 mit Hilfe von Tretachse 30 und darauf montierten Pedalen 10 angetrieben werden kann. Nur als Beispiel ist hier die Freilaufkupplung 100 wie beim vordersten Kettenrad, wie in den Figuren 4-11, montiert, wiedergegeben.

Voran ist das Tretauto 1 mit Vorderrädern 6 vorsehen, die frei drehbar auf den Endes eines Vorderbalkens 12 des Chassis und auf den Achsschenkelenden der Spurstange 8, die mit Hilfe von Lenkstange und Lenkrad hin und her bewogen werden kann, angeordnet sind.

Mit Hilfe der Freilaufkupplung kann das Tretauto 1 nach Wahl des Benutzers in die Richtung A, vorwärts oder in die Richtung B rückwärts angetrieben werden oder in eine dieser Richtungen ohne aktiven Antrieb fahren.

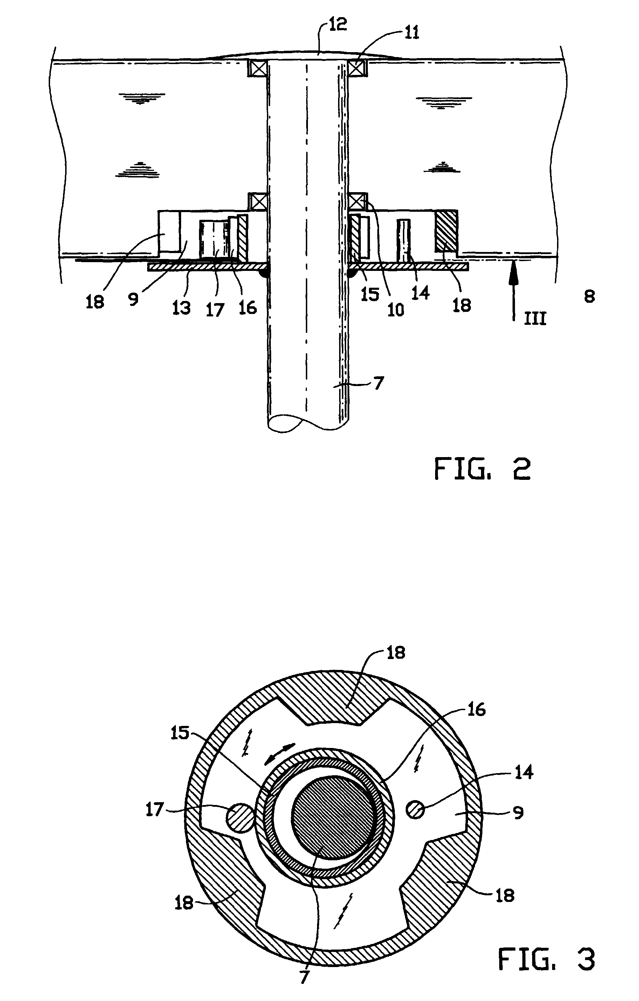

Unter Bezug auf die Figuren 2 und 3, darin ist eine Hinterachse 7, die auf übliche Weise durch ein nicht wiedergegebenes Kettenrad angetrieben wird, mit einer darauf geschweißten Querplatte 13 versehen. Diese Querplatte 13 deckt eine Vertiefung 9 ab, welche durch Mitformen im Nabegebiet mit einem Kunstoffrad 8 versehen ist. Hierbei ist das Rad weiter mit einem relativ zurückgelegenen Lager 10 und einem üblichen Lager 11, durch eine kleine Kappe 12 abgedeckt, versehen. Die Querplatte 13 trägt einen darauf geschweißten Mitnehmer 14 und einen exzentrisch darauf geschweißten Ring 15. Auf dem Ring 15 ist ein Ring 16 drehbar gelagert. Der Ring 16 ist mit einer darauf geschweißten Nocke 17 versehen. An der radial einwärts gekehrten Oberfläche der Vertiefung 9 sind eine Anzahl Nocken 18 mitgeformt.

Wie ausführlich bei der Besprechung der Ausführung der Figuren 4-6 zur Sprache kommen wird, kann hiermit bei Antrieb eine Kupplung zwischen - in diesem Fall - Achse und Rad zustande gebracht werden und sonst ein Freilauf. Wie in Figur 2 zu sehen ist, kann der Mitnehmer 14 frei entlang den Nocken 18 drehen, aber wird dieser zu einem bestimmten Zeitpunkt die Nocke 17 anstoßen und diese in Drehung mitnehmen, bis die Nocke 17, die dabei auch eine Bewegung radial nach außen erfährt, eine Nocke 18 berührt, wonach die Rotationsbewegung der Achse 7 auf das Rad 8 übertragen wird. Wenn die Achse 7 stillgehalten wird, wird der Angriff verbrochen und ist es die Rede von einem Freilauf.

Die Nocken 18 sind ziemlich breit in Umfangsrichtung, um einen Vorsprung vor eventuellem Verschleiß zu nehmen.

Ein Rad wie wiedergegeben kann einfach gebildet werden. Das Rad 8 kann für normalen Gebrauch geeignet gemacht werden durch einen Stahlring darin zu preßpassen. Dieser Ring ist dann mit einem Durchgang für die Achse 7 versehen, und kann eventuell auch von einem kompletten Lager versehen sein.

Bei dem Aufstellen der Freilaufkupplung gemäß den Figuren 2 und 3 kann man eine Achse 7 benutzen, worauf vorab die Querplatte mit Ring und Mitnehmer geschweißt ist, und diese einfach auf das Tretauto montieren, schon bei der Herstellung oder aber als Ersetzung.

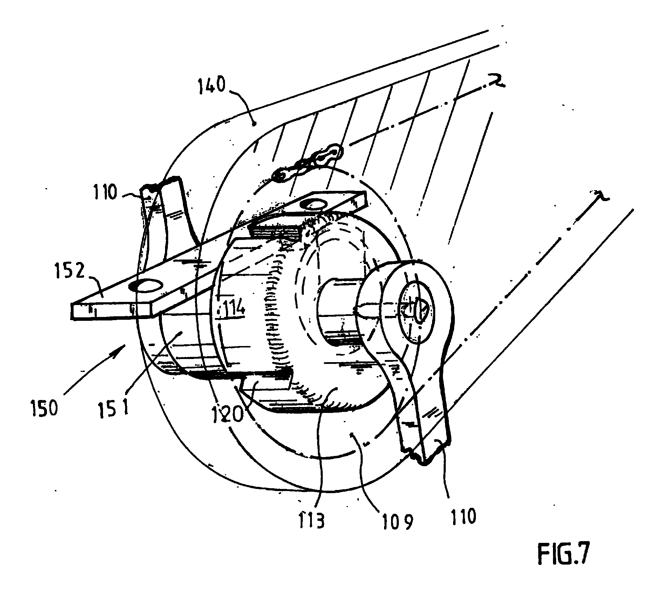

Unter Bezug auf die Figuren 4-7, darin ist auf dem Zahnrad 109 eine Kappe 113 festgesetzt, zum Beispiel durch schweißen, um damit ein rotierbares Ganzes zu bilden. Die Kappe 113 umfaßt einen Boden 114a und eine Umfangswand 114b. Die Tretachse 130 reicht durch den Boden 114a und ist hinsichtlich davon drehbar. In den Figuren 4-6 ist die Kappe 113 vertikal durchgeschnitten. Wie in Figur 7 zu sehen ist, ist die Kappe 113 durch einen Kettenschutz 140 umgeben und zu einer Seite geschlossen und an der entgegengesetzten, offenen Seite zu einer Montagebuchse 150 gekehrt, die von einem Lager 151 für die Tretachse und Freilaufkupplung und von Montageflanschen 152, womit das Ganze von Tretachse 130, Freilaufkupplung 100 und Montagebuchse 150 an den Chassisbalken 102 - mittels üblicher Bolzen - montiert werden können, versehen ist.

Innerhalb der Kappe 113, zwischen der Kappe und der Tretachse 130, befinden sich weitere Unterteile der Freilaufkupplung 100 gemäß der Anmeldung.

Radial von innen nach außen betrachtet, ist zuerst eine Buchse 115 engpassend aber relativ drehbar auf die durch die Kappe 113 reichende Tretachse 130 mit einem Radius R₁ von zum Beispiel 7,5 Millimeter gestellt. Diese Buchse 115, die so lang ist daß diese durch die Montagebuchse 150 reicht, kann einen Außenumfang mit einem Radius von 7 Millimeter haben, und ist an einem Ende an dem Boden der Kappe 113 befestigt.

Auf der Buchse 115 ist eine Buchse 131 gelagert, die auch ausreichend lang ist um durch die Montagebuchse 150 zu reichen, um darin gelagert zu sein. Die Buchse 131 ist an der Tretachse 130 verschweißt um damit zu drehen und ist nahe dem Boden der Kappe 113 an einer Platte 116 verschweißt.

Auf der Platte 116 ist eine weitere, um die Buchse 131 gelegene Buchse 117 verschweißt, die jedoch einen Mittelpunkt hat der auf einem Abstand e von der Herzlinie der Tretachse 130 liegt. Um die Buchse 117 ist eine weitere Buchse 118 gesetzt, die mit Innenoberfläche 118a in Umfangsrichtung über Außenoberfläche 117a der Buchse 117 frei bewegen kann. Die Buchsen 117 und 118 haben nahezu dieselben Längen. Die Buchsen 117 und 118 werden in axialer Richtung, von der Kappe 113 entfernt, mittels der Montagebuchse 150 an ihrer Stelle gehalten, Die Plane 116 reicht mit einem Mitnehmer 116e radial bis außerhalb der Buchse 118. Die Buchse 118 ist an der Außenoberfläche mit einer daran geschweißten (ersten) Nocke 119 versehen, die - in eine Richtung der Fläche der Zeichnung senkrecht nach oben - an dem Rand der Buchse 118 vorbei reicht, bis an die zur Kappe 113 gekehrte Endfläche der Plane 116 und liegt in einer Radialfläche die mit der Plane 116 zusammenfällt. Die Nocke 119 hat hauptsächlich in gegengestellten Richtungen gekehrte Anschlagsoberflächen 119 und 119b. Diese Anschlagsoberflächen (oder zweite Nocken) 119a und 119b sind bestimmt, um während dem Betrieb der Freilaufkupplung gemäß der Erfindung nach Wahl mit Mitnehmeroberflächen 116a und 116b zusammenzuarbeiten, die auf den Rändern des Mitnehmers 116e gebildet sind, und Antriebsoberflächen 120a, 120b, 121a, 121b und 122a, 122b die beziehungsweise auf Einbeulungen oder Einkerbungen 120, 121 und 122 in der Umfangswand 114 der Kappe 113 gebildet sind. Diese Einkerbungen laufen vorzugsweise über die totale Höhe der Umfangswand 114, zumindest bis über die totale Länge der Nocke 119, für das Verschaffen einer möglichst großen Antriebsoberfläche.

Die Plane 116 hat einen kreisförmigen Endrand 116c, der bei Drehung der Tretachse 130 eine Kreisbahn mit Radius R4 von zum Beispiel 36 Millimeter welche konzentrisch mit der Herzlinie M der Tretachse 130 ist, beschreibt. Die Kappe 113 und die Umfangswand 114b davon sind auch konzentrisch mit der Tretachse 130 und haben hinsichtlich der Herzlinie davon einen Radius - an Ort und Stelle der Innenoberfläche - von R2 von zum Beispiel 48 Millimeter. Die Spitzen der Einkerbungen 120, 121 und 122 liegen auf einem Kreis mit Radius R3 hinsichtlich der Herzlinie der Tretachse 130, der zum Beispiel 40 Millimeter beträgt und größer ist als R4.

Die Nocke 119, die auf der Zeichnung gesehen, hinsichtlich des Endrandes der Buchse 118, nach unten vorsteht, liegt mit der äußersten Fläche auf einem Radius R5 von zum Beispiel 40 Millimeter ab der Herzlinie N der Buchse 118, welche Herzlinie N, wie schon erwähnt, auf einem Abstand e von zum Beispiel 4 Milimeter von der Herzlinie der Tretachse 130 liegt. Die Außenoberfläche der Buchse 118 hat einen Radius von R6 von zum Beispiel 25 Millimeter. Dieser Radius R6 ist derartig, daß der Abschnitt 116e von der Plane 116 radial außerhalb der Buchse 118 reicht und mit der Mitnehmeroberfläche 116a oder 116b in die Bahn der Nocke reicht, so daß entweder die Oberflächen 116a und 119b, oder die Oberflächen 119a und 116b einander angreifen können.

Da Radius R4 kleiner ist als der Radius R3 kann die Plane oder Nocke 116 im Prinzip innerhalb der Kappe 113 frei umlaufen. Wenn das geschieht, und die Situation in Figur 5 vorhanden ist, ist keine Kupplung zwischen der Tretachse 130 (mit der Plane 116) und dem Zahnrad 122 (mit der Kappe 113) vorhanden. Dies ist der Freilaufzustand.

Wenn mit Hilfe der Pedale 110 die Kette 111 wieder angetrieben wird um rückwärts zu fahren, wird die Tretachse 130 in die Richtung C (siehe Figur 4) verdrehen. Dies gilt auch für die Platte 116, und diese wird zu einem bestimmten Zeitpunkt mit der Mitnehmeroberfläche 116a die Oberfläche 119b der Nocke 119 anstoßen. Diese Nocke 119 wird dann durch die Platte 116 auf positive, direkte Weise rundgedreht, wobei die Buchse 118 über die Buchse 117 mitrotiert. Vorangehend an dem Angriff durch die Platte 116 ist infolge der exzentrischen Lage der Buchse 118 hinsichtlich der Rotationsherzlinie der Tretachse 130 die Nocke 119 hinsichtlich davon radial nach außen bewogen, das heißt näher zu der mit der Tretachse 130 konzentrischen Wand 114b der Kappe 113.

Bevor die Nocke 119 jedoch den maximalen radialen Stand, in der Fläche S gelegen, erreichen kann, hat diese die Mitnehmeroberfläche 116a der Plane 116 schon berührt. Hierdurch wird verhütet, daß die Nocke 119 gegen die Innenoberfläche der Wand 114b zwischen den Einkerbungen 120, 121 und 122 festlaufen könnte, aber wobei dann wohl eine Kappe 113 mit einer möglichst kleinen Diameter benutzt werden kann.

Die Plane 116 nimmt infolge des Antriebs via Tretachse 130 die Nocke 119 mit, bis diese mit Oberfläche 119a die Oberfläche 122a (in diesem Beispiel) von Einkerbung 122 berührt. Ab diesem Moment wird die Antriebskraft auf sichere Weise von der Tretachse 130, via Plane 116 auf die Nocke 119 und von der Nocke 119 auf die Einkerbung 122 und damit auf die Kappe 113 und damit auf das Zahnrad 109 übertragen.

Wenn die Pedale 110 gehalten werden, wird die Plane 116 auch zum Stillstand kommen, aber dadurch daß die Räder 105 weiter rollen bleiben und die Kette 11 umlaufen bleibt, wird das Zahnrad weiter rotieren und dasselbe gilt für die Kappe 113. Hierdurch wird die Einkerbung 122 von der Nocke 119 wegdrehen und wird die folgende Nocke 121 mit der Oberfläche 121b die Oberfläche 119b angreifen und die Nocke 119, die mit der frei drehbaren Buchse 118 fest verbunden ist, in die Richtung C mitnehmen, bis, infolge der gegenseitig exzentrischen Lage der Buchse 118 und Kappe 113, die Oberflächen 121b und 119b außerhalb ihrem gegenseitigen Bereich divergieren. An dessem Moment ist die Freilaufsituation wieder erreicht.

Wenn vom Freilaufstand zum Antriebsstand vorwärts in Figur 6 übergegangen werden muß, finden dieselben Vorfälle statt als die welche bei der Besprechung von Figur 4 umschrieben sind, nur in entgegengestellter Richtung D. Die Nocke 119 wird dann einerseits durch Mitnehmeroberfläche 116b der Platte 116 angegriffen und anderseits durch Oberfläche 121b der Einkerbung 121 aufgehalten, so daß die Kappe 113 in die Richtung D mitrotiert. Durch diese Einklemmung wird weiter verhütet, daß die Nocke 119 mit Buchse 118 klappern gehen kann.

Gesehen werden wird, daß die Freilaufkupplung gemäß der Erfindung sehr einfach von Aufbau ist und deshalb zuverlässig funktionieren kann und außerdem wenig Raum beansprucht. Außerdem ist die Freilaufkupplung leicht zu stellen oder zu entfernen.

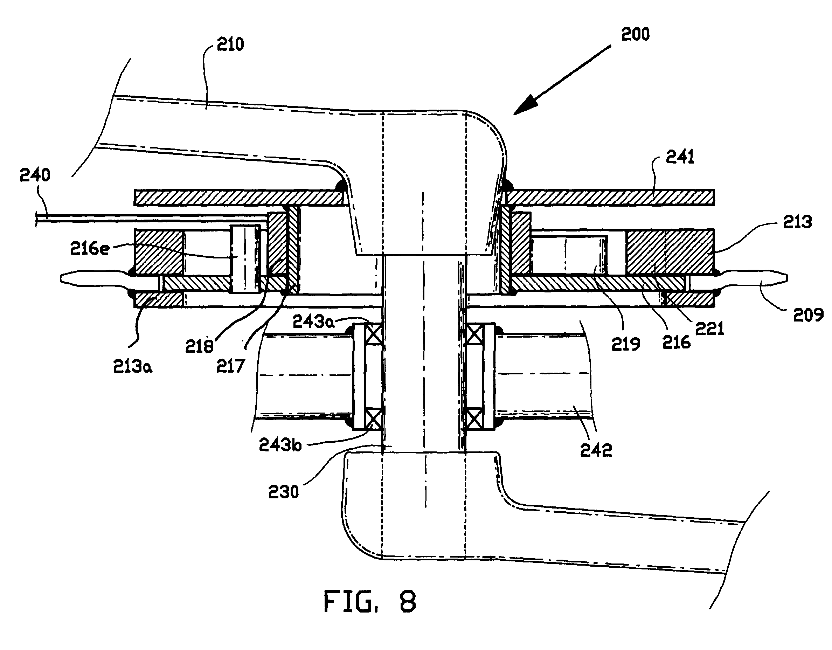

In den Figuren 8-11 ist ein Alternativ für die Freilaufkupplung 100 wiedergegeben. Die Freilaufkupplung 200 ist hierbei im Prinzip gleich an den vorherbesprochenen Freilaufkupplungen aufgebaut, aber ist jetzt näher zu dem Pedalausgang gesetzt. An dem Pedal 210 ist jetzt eine Querplatte 241 geschweißt, worauf eine exzentrische Buchse 217 geschweißt ist. Eine Buchse 218 ist drehbar auf der Buchse 217 gelagert und mit einer Nocke 219 versehen. Auf axialem Abstand der Plane 241 ist am Ende der Buchse 217 eine Querplatte 216 geschweißt, worauf ein Mitnehmer 216e geschweißt ist.

Um die Buchsen 217, 218 ist das Kettenrad 209 gesetzt, konzentrisch mit der Achse 230. Die Achse 230 ist auf übrigens übliche Weise in den Lagern 243 a,b auf dem Chassisteil 242 gelagert.

Auf dem Kettenrad 209 - oder besser Kettenring - sind ein dicker Ring 213 und ein dünner Verschlußring 213a geschweißt. Diese Ringe bilden mit dem Ring 209 eine Kammer oder einen Lager für die Querplatte 216. Die Querplatte 216 sorgt für das an der Stelle bleiben, im radialen Sinne, des Ringes 209, vergleichbar mit der Kappe 113 und dem Kettenrad 109 der Figuren 4-7.

Die Freilaufkupplung 200 ist durch die Querplatten 241 und 216 abgeschirmt, aber es ist einen kleinen Spalt übriggelassen, wohindurch eine auf dem Chassis befestigte Feder 240 reichen kann, die eine Bremskraft auf die Buchse 218 ausübt, so daß diese im Freilaufstand nicht ungewünscht dreht.

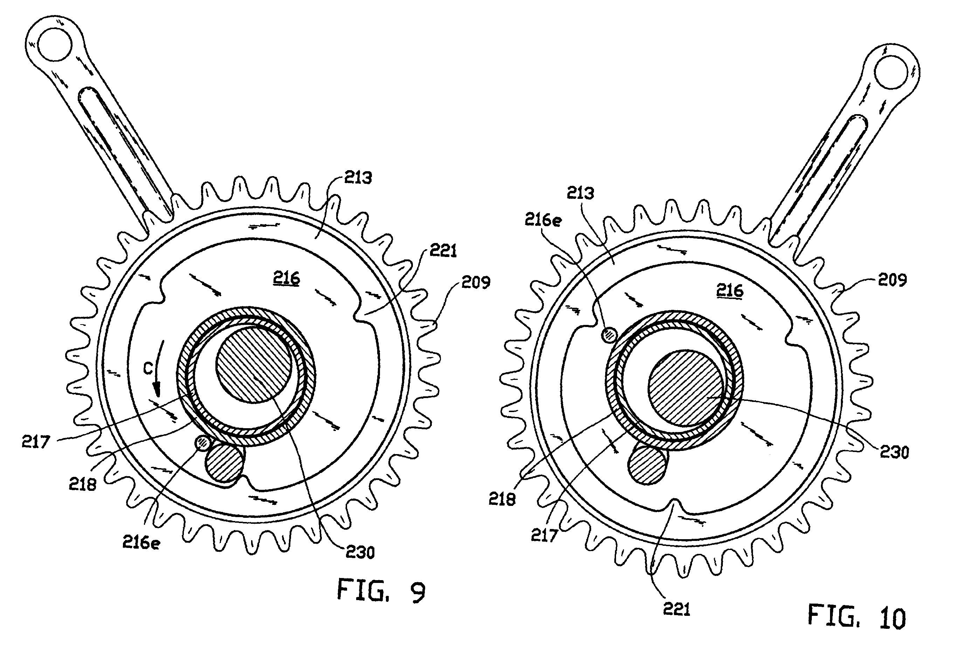

In den Figuren 9-11 sind Zustande vergleichbar mit den von den Figuren 4-6 wiedergegeben. Nur für die Idee ist die Tretkurbel 210 wiedergegeben, obwohl diese eigentlich oberhalb der Fläche der Zeichnung liegt.

Die Tretkurbel 210 ist auf übliche Weise auf der Achse festgelegt und kann da wieder abmontiert werden. Mit der Tretkurbel 210 kann dann die ganze Freilaufkupplung entfernt werden. Umgekehrt kann ein konventionelles Tretkurbelgestell leicht durch ein Tretkurbelgestell laut der Erfindung ersetzt werden.

## Patentansprüche

1. Tretauto mit einer Freilaufkupplung zwischen einem anzutreibenden Unterteil, wie einem Kettenrad oder Rad, und einem treibenden Unterteil, wie einem Tretantrieb oder einer Achse, beziehungsweise, mit Kuppelmitteln umfassend zumindest eine erste, mit treibendem Unterteil in mitrotierenden Zustand bringbare Nocke und zumindest eine zweite, mit dem zu treibenden Unterteil feste Nocke, wobei die erste Nocke exzentrisch um die Rotationsachse des treibenden Unterteils zwischen einem relativ radial außengelegenen, in der Bahn der zweiten Nocke greifenden ersten Antriebsstand und einem relativ radial innengelegenen, außer der Bahn der zweiten Nocke fallenden Freilaufstand drehbar ist, wobei das treibende Unterteil mit darauf befestigten Mitnehmermitteln versehen ist, für das bei Rotation Versetzen der ersten Nocke zu treibendem Angriff mit der zweiten Nocke, wobei zumindest ein der Kuppelmittel auf einem Unterteil, das auch zu den Mitteln für das hinsichtlich der betreffenden Rotationsachse Zentrieren des anzutreibenden Unterteils gehört, befestigt ist.

2. Tretauto gemäß Anspruch 1, wobei das Kuppelmittel eine zweite Nocke ist.

3. Tretauto gemäß Anspruch 2, wobei die zweite Nocke zu einem anzutreibenden Rad gehört, worauf ein Reifen montiert ist.

4. Tretauto gemäß Anspruch 3, wobei die zweite Nocke mit dem Rad in einer Vertiefung darin, vorzugsweise im Nabengebiet, mitgeformt ist.

5. Tretauto gemäß Anspruch 4, wobei eine Querplatte auf der Hinterachse befestigt ist, um die Vertiefung abzudecken, wobei die Querplatte mit den Mitnehmermitteln versehen ist.

6. Tretauto gemäß Anspruch 5, wobei ein mit der ersten Nocke versehener Ring exzentrisch auf der Querplatte gelagert ist, vorzugsweise auf einem auf der Querplatte befestigten, exzentrischen Ring.

7. Tretauto gemäß einem der Ansprüche 4-6, wobei die zweite Nocke über ein Teil des Bogens eine konstante radiale Dicke hat.

8. Tretauto gemäß einem der Ansprüche 4-7, wobei die zweite Nocke eine Bogenlänge in der Größenordnung von mindestens einem Zentimeter hat.

9. Rad für ein Tretauto, mit einer Vertiefung gemäß einem der Ansprüche 4-8 versehen.

10. Rad gemäß Anspruch 9, wobei das Rad aus Kunststoff hergestellt ist.

11. Tretauto gemäß Anspruch 2, wobei die zweite Nocke auf einem Ring gebildet ist, der das vorderste oder erste Kettenrad auf die Tretachse zentriert.

12. Tretauto gemäß Anspruch 11, wobei der Ring fest an dem Kettenrad befestigt ist.

13. Tretauto gemäß Anspruch 1, wobei das Kuppelmittel ein Mitnehmermittel ist.

14. Tretauto gemäß Anspruch 13, wobei das Mitnehmermittel auf einer Querplatte befestigt ist, die das vorderste oder erste Kettenrad auf die Tretachse zentriert.

15. Tretauto gemäß Anspruch 1, mit Tretachse mit damit verbundenen Pedalen, einem auf der Tretachse angeordneten, eine Antriebskette angreifenden ersten Kettenrad und einem auf der Radachse angeordneten zweiten Kettenrad, wie auch einer um die beiden Kettenräder laufenden Übertragungskette, wobei zwischen dem ersten Kettenrad und der Tretachse eine Freilaufkupplung angeordnet ist.

16. Tretauto gemäß Anspruch 15, wobei die Freilaufkupplung weiter mit der Tretachse drehfeste Mittel für das bei Verdrehung der Tretachse Mitnehmen von der ersten Nocke zu der zweiten Nocke bis in den ersten Antriebsstand umfaßt.

17. Tretauto gemäß Anspruch 16, wobei die Mitnehmermittel für Wirkung in zwei entgegengesetzten Rotationsrichtungen eingerichtet sind.

18. Tretauto gemäß Anspruch 16 oder 17, mit einem ersten, drehfest mit der Tretachse verbundenen, kreisförmigen mit der Tretachse exzentrischen Ring, wobei die erste Nocke auf einem zweiten, kreisförmigen, mit der Tretachse exzentrischen Ring, der auf dem ersten Ring drehbar gelagert ist, befestigt ist.

19. Tretauto gemäß Anspruch 18, wobei die Mitnehmermittel ein festes Ganzes mit dem ersten Ring bilden und vorzugsweise mit in zwei entgegengesetzen Umfangsrichtungen gekehrten Mitnehmeroberflächen versehen sind, die hinsichtlich der Linie durch die Mine der Tretachse und des Exzenterpunktes symmetrisch gelegen sind.

20. Tretauto gemäß einem der Ansprüche 16-19, wobei die zweite Nocke radial betrachtet innerhalb des ersten Kettenrads gelegen ist.

21. Tretauto gemäß Anspruch 20, wobei die zweite Nocke auf einem mit der Tretachse konzentrischen Ring angeordnet ist.

22. Tretauto gemäß einem der Ansprüche 16-21, wobei eine Anzahl in Rotationsrichtung auf Abstand voneinander gelegene zweite Nocken vorgesehen sind.

23. Tretauto gemäß einem der Ansprüche 16-22, wobei die Mitnehmermittel auf einer quer auf der Tretachse stehenden Plane befestigt sind, die drehfest mit der Tretachse sind.

24. Tretauto gemäß einem der Ansprüche 16-23, wobei die Mitnehmermittel ein festes Ganzes mit einem Tretkurbel bilden.

25. Tretauto gemäß Anspruch 24, wobei der erste Ring ein festes Ganzes mit dem Tretkurbel bildet.

26. Tretauto gemäß Anspruch 25, wobei eine erste Querplatte mit dem ersten Ring ein festes Ganzes bildet und an der zum Tretkurbel gekehrten Seite mit den Mitnehmermitteln versehen ist, die vorzugsweise axial davon aufrecht sind.

27. Tretauto gemäß Anspruch 26, wobei das erste Kettenrad zu einem Lager für die erste Querplatte gehört, die vorzugsweise radial und axial innerhalb des ersten Kettenrade liegt.

28. Tretauto gemäß Anspruch 26 oder 27, weiter mit einer zweiten Querplatte versehen, die mit dem Tretkurbel ein festes Ganzes bildet, wobei der erste Ring die Verbindung zwischen den beiden Querplatten bildet.

29. Tretauto gemäß Anspruch 28, wobei die beiden Querplatten die Freilaufkupplung zu zwei entgegengesetzten axialen Seiten abschirmen.

30. Tretauto gemäß Anspruch 28 oder 29, wobei ein Ziehspalt zwischen der zweiten Querplatte und den Mitnehmermitteln für ein vom Chassis ab reichendes Bremsmittel für den zweiten Ring übriggelassen ist.

31. Tretauto gemäß einem der Ansprüche 24-30, wobei der Tretkurbel mit dem ersten Kettenrad und der dazwischen gelegenen Freilaufkupplung eine als ein Ganzes montierbare Einheit bilden.

32. Tretauto gemäß einem der Ansprüche 18-24, wobei der erste Ring mit der eigentlichen Tretachse ein Ganzes bildet.

33. Tretauto gemäß Anspruch 32, wobei die zweite Nocke auf einer über die Kupplung reichenden Kappe angeordnet ist, vorzugsweise in oder auf der radial einwärts gekehrten Umfangsoberfläche davon.

34. Tretauto gemäß Anspruch 33, wobei die Kappe mit einer ersten Buchse versehen ist, die um die Tretachse greift, wobei auf der Tretachse eine damit drehfeste zweite Buchse vorgesehen ist, die auf der ersten Buchse gelagert ist.

35. Tretauto gemäß einem der Ansprüche 32-34, wobei die zweite (n) Nocke/ Nocken auf einer Schale gelegen, die mit dem Boden die axiale, seitwärtse Begrenzung für einen Kupplungsraum der Freilaufkupplung bildet, welcher Raum zu der entgegegengesetzten Seite durch einen Kettenschutz abgeschirmt ist.

36. Tretauto gemäß einem der Ansprüche 32-35, wobei die Freilaufkupplung in einem Kettenschutz aufgenommen ist.

37. Tretauto gemäß einem der Ansprüche 32-36, wobei die Tretachse in einem Tretachselager gelagert ist, das auf abnimmbare Weise an einem Chassisbalken des Tretautos befestigt ist.

38. Freilaufkupplung wie in einem der vorhergehenden Ansprüche umschrieben, offenbar geeignet und bestimmt für ein Tretauto.

39. Freilaufkupplung für ein Tretauto, für das Kuppeln eines Tretantriebs des Tretautos mit einem Zahnrad, umfassend einerseits einen mit der Tretachse konzentrisch und drehfest mit dem Zahnrad verbundenen Körper, wie zum Beispiel eine Kappe, mit zumindest einer radial einwärts reichenden Nocke, die auf einer mit der Tretachse konzentrischen Kreisbahn liegt und anderseits eine innerhalb des Körpers drehbare, hinsichtlich der Tretachse exzentrische Nocke, die zwischen einem relativ radial innengelegenen, außerhalb der Kreisbahn der Nocke an den Körper fallenden Freilaufstand und einem relativ außengelegenen, in der Kreisbahn dieser Nocke greifenden Antriebs- oder Kuppelstand, versetzbar ist.

40. Freilaufkupplung gemäß Anspruch 39, wobei der Tretantrieb von einem damit drehfesten Mitnehmer versehen ist, für das in Rotationsrichtung zum Antriebsstand Mitführen der exzentrischen Nocke und diese darin angedrückt zu halten.

41. Freilaufkupplung gemäß Anspruch 40, wobei die exzentrische Nocke direkt oder indirekt auf der Tretachse gelagert ist.
